# EUROPÄISCHE PATENTSCHRIFT

(11) **EP 0 340 519 B1**
(45) Veröffentlichungstag und Bekanntmachung des Hinweises auf die Patenterteilung: **26.07.1995**
(21) Anmeldenummer: 89106874.4
(22) Anmeldetag: 17.04.1989
(51) Int. Cl.: G01N 21/37

(54) **Pneumatischer Detektor für NDIR-Analysengeräte**
Pneumatic detector for NDIR analytical devices
Détecteur pneumatique pour appareils d'analyse NDIR

(30) Priorität: 04.05.1988 DE 3815184
(43) Veröffentlichungstag der Anmeldung: 08.11.1989
(73) Patentinhaber: SIEMENS AKTIENGESELLSCHAFT, 80333 München (DE)
(72) Erfinder: Wendt, Klaus, Dr., D-7500 Karlsruhe (DE); Weinel, Johann, D-7500 Karlsruhe 31 (DE)

(56) Entgegenhaltungen:
- DE-A- 2 808 033
- DE-A- 3 524 189
- GB-A- 675 158
- US-A- 2 924 713
- US-A- 4 110 619

## Beschreibung

Die Erfindung bezieht sich auf einen pneumatischen Detektor für nichtdispersive Infrarot-(NDIR)-Analysengeräte gemäß dem Oberbegriff des Anspruchs 1.

Eines der wesentlichen Probleme bei der NDIR-Gasanalyse ist das Auftreten von Querempfindlichkeiten, d. h. Überlappen der Absorptionsbanden der zu messenden Komponente mit Absorptionsbanden eines oder mehrerer Störgase, was zu Fehlmessungen führt. Zur Kompensation von derartigen Querempfindlichkeiten sind mehrere Methoden bekannt, beispielsweise das Vorsehen von mit den Störgaskomponenten gefüllten Detektorkammern, wie es in GB-A-675 185 angegeben ist. Aus US-A-4 110 619 ist die Verwendung von pneumatischen Mehrschichtdetektoren mit zwei Kammern bekannt, die optisch hintereinander und pneumatisch über einen Druck- oder Strömungsfühler gegeneinander geschaltet sind, wobei das Verhältnis der Kammerlängen in Strahlrichtung für verschiedene Meßgase gegenüber einem Störgas unterschiedlich ausgelegt werden muß, um das Störsignal auf Null zu bringen. Die Kammern können mit einer Störgaskomponente gefüllt sein. Aus DE-A-28 08 033 ist die Verwendung von SF₆ in einer vor dem Detektor angeordneten Filterküvette als Ersatzgas für H₂O bekannt.

Es besteht die Aufgabe, die Kompensation der Querempfindlichkeit von Analysengeräten der im Oberbegriff des Anspruchs 1 angegebenen Art zu vereinfachen bzw. zu verbessern.

Dies wird mit einem Detektor gemäß Anspruch 1 erreicht.

In einer bevorzugten Ausführungsform gemäß Anspruch 3 ist die optisch wirksame Länge der - in Strahlrichtung gesehen - ersten Kammer kleiner als die der zweiten Kammer, bei gleichem Gasvolumen in beiden Kammern. Bei einer weiteren Ausführungsform gemäß Anspruch 4 sind die optisch wirksamen Längen der beiden Kammern gleich, die Gasvolumen ungleich. Dies kann in beiden Fällen durch eine gasleitende Verbindung der ersten Kammer mit einem nicht durchstrahlten Ballastvolumen erreicht werden.

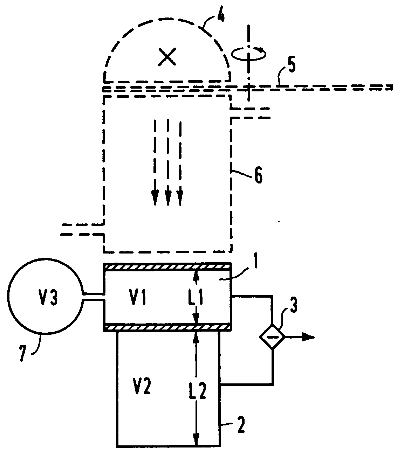

In der Figur ist ein Ausführungsbeispiel schematisch dargestellt. Der pneumatische Detektor besteht aus einer ersten Kammer 1, einer zweiten, in Strahlrichtung dahinterliegenden zweiten Kammer 2 und einer pneumatischen Gegeneinanderschaltung der Kammern über einen Druck- oder Strömungsfühler 3, der bei auftretender Druckdifferenz zwischen beiden Kammern ein entsprechendes elektrisches Signal abgibt.

Die übrigen Teile eines zugehörigen NDIR-Gasanalysengerätes sind gestrichelt eingezeichnet: Auf eine Infrarot-Strahlungsquelle 4 folgt im Strahlengang ein als Unterbrecher wirkendes Blendenrad 5, eine von dem Probengas, z. B. Rauchgas, durchströmte Meßküvette 6, und der bereits beschriebene pneumatische Detektor.

Die erste Kammer 1 des pneumatischen Detektors hat die optisch wirksame Länge L1, die zweiten Kammer 2 die Länge L2, wobei L1 kleiner ist als L2. In dem gezeigten Beispiel beträgt das Längenverhältnis L1 : L2 etwa 0,5.
Um den Schwefeldioxyd-Anteil eines Rauchgases zu messen, enthalten die Kammern eine Gasfüllung aus beispielsweise 30 % SO₂ und 70 % Stickstoff.
Da das Rauchgas in der Regel Wasserdampf enthält, dessen Absorptionsbanden die des Schwefeldioxyds überlagern, muß dafür gesorgt werden, daß die dadurch entstehende Querempfindlichkeit vermindert wird.
Bei den oben genannten geometrischen Verhältnisen wird durch H₂O-Störgasanteil im SO₂-enthaltenden Rauchgas die Anzeige größer, d. h., durch H₂O wird ein positiver Quereinfluß erzeugt. Bei den gleichen geometrischen Verhältnissen kann der Quereinfluß durch H₂O negativ werden, wenn die Detektorfüllung ein absorptionsmäßig dem Wasserdampfanteil entsprechendes Ersatzgas, z. B. 10 % SF₆ oder 10 % Äthylen, enthält. Durch Kombination von SF₆ und SO₂ im Detektor gelingt es so, die Querempfindlichkeit gegen H₂O auf Null zu kompensieren.

Zur Anpassung der Gasvolumen an die gestellten Bedingungen gemäß Anspruch 3 oder Anspruch 4 ist mit der ersten Kammer 1 ein Gasraum 7 mit dem Volumen V3 gasleitend verbunden, wobei V3 derart bemessen ist, daß die Summe aus dem Gasvolumen V1 der ersten Kammer 1 und dem Ballastvolumen V3 gleich ist dem Gasvolumen V2 in der Kammer 2 (V1 + V3 = V2) bei unterschiedlichen optisch wirksamen Längen (L1 < L2) - wie in dem gezeigten Beispiel - oder ungleich (V1 + V3 > V2) bei gleichen optisch wirksamen Längen L1 und L2.

## Patentansprüche

1. Pneumatischer Detektor für nicht dispersive Infrarot-Analysegeräte mit zwei im Strahlengang optisch hintereinander und pneumatisch über einen Druck- oder Strömungsfühler (3) gegeneinander geschalteten Kammern (V1, V2), die mit der zu analysierenden Komponente eines Gasgemisches gefüllt sind, **dadurch gekennzeichnet,** daß zur Kompensation von durch eine im Gasgemisch enthaltene Störkomponente verursachte Querempfindlichkeiten beide Kammern (V1, V2) mindestens eine der Störgaskomponente absorptionsmäßig entsprechende, nicht mit der Störgaskomponente identische, Ersatzgaskomponente enthalten.

2. Pneumatischer Detektor nach Anspruch 1, **dadurch gekennzeichnet**, daß zum Messen des SO₂-Anteils in Rauchgas zur Kompensation der durch H₂O-bedingten Querempfindlichkeit beide Kammern (V1, V2) SF₆ oder Äthylen enthalten.

3. Pneumatischer Detektor nach Anspruch 1 oder 2, **dadurch gekennzeichnet**, daß die optisch wirksame Länge (L1) der in Strahlrichtung gesehen ersten Kammer (1) kleiner ist als die optisch wirksame Länge (L2) der zweiten Kammer (2) und daß die Gasvolumen beider Kammern gleich sind.

4. Pneumatischer Detektor nach Anspruch 1 oder 2, **dadurch gekennzeichnet**, daß die optisch wirksame Länge (L1) der in Strahlrichtung gesehenen ersten Kammer (1) gleich ist der optisch wirksamen Länge (L2) der zweiten Kammer (2) und daß die Gasvolumen beider Kammern ungleich sind.

5. Pneumatischer Detektor nach Anspruch 3 oder 4, **dadurch gekennzeichnet**, daß sich das Gasvolumen der ersten Kammer (1) aus dem in der Kammer befindlichen, durchstrahlten Gasvolumen (V1) und einem mit der Kammer (1) gasleitend verbundenen, nicht durchstrahlten Ballastvolumen (V3) zusammensetzt.

## Claims

1. Pneumatic detector for non-dispersive infrared analysis devices with two chambers (V1, V3) connected in the beam path optically in series and pneumatically by way of a pressure or flow sensor (3) against one another, the chambers being filled with the component of a gas mixture to be analyzed, characterized in that to compensate for cross sensitivities caused by a disturbance component contained in the gas mixture both chambers (V1, V2) contain at least one replacement-gas component which corresponds to the disturbance-gas component in terms of absorption and is not identical to the disturbance-gas component.

2. Pneumatic detector according to claim 1, characterized in that to measure the SO₂ content in the flue gas to compensate for the cross sensitivity caused by H₂O both chambers (V1, V2) contain SF₆ or ethylene.

3. Pneumatic detector according to claim 1 or 2, characterized in that the optically effective length (L1) of the first chamber (1) seen in the beam direction is smaller than the optically effective length (L2) of the second chamber (2) and in that the gas volumes of both chambers are the same.

4. Pneumatic detector according to claim 1 or 2, characterized in that the optically effective length (L1) of the first chamber (1) seen in the beam direction is the same as the optically effective length (L2) of the second chamber (2) and in that the gas volumes of both chambers are different.

5. Pneumatic detector according to claim 3 or 4, characterized in that the gas volume of the first chamber (1) is composed of the gas volume (V1) which is located in the chamber and which is penetrated by radiation and a ballast volume (V3) which is connected in a gas-conducting manner to the chamber (1) and is not penetrated by radiation.

## Revendications

1. Détecteur pneumatique pour appareils d'analyse infrarouge non dispersifs,comportant deux chambres (V1, V2) montées dans le sens du rayonnement, optiquement l'une derrière l'autre et pneumatiquement opposées l'une à l'autre par l'intermédiaire d'un capteur de pression ou d'écoulement (3), lesquelles sont remplies de la composition de mélange gazeux à analyser, caractérisé par le fait que, pour compenser les sensibilités transversales provoquées par un constituant gênant du mélange gazeux, les deux chambres (V1, V2) contiennent au moins un constituant gazeux équivalent qui n'est pas identique au constituant gazeux gênant et dont l'absorption correspond à celle du constituant gazeux gênant.

2. Détecteur pneumatique selon la revendication 1, caractérisé par le fait que, pour mesurer la proportion de SO₂ présente dans le gaz de fumée et pour compenser la sensibilité transversale due au H₂O, les deux chambres (V1, V2) contiennent du SF₆ ou de l'éthylène.

3. Détecteur pneumatique selon la revendication 1 ou 2, caractérisé par le fait que la longueur optique efficace (L1) de la première chambre (1), considérée dans la direction du rayonnement, est plus petite que la longueur optique efficace (L2) de la seconde chambre (2), et que les volumes de gaz des deux chambres sont identiques.

4. Détecteur pneumatique selon la revendication 1 ou 2, caractérisé par le fait que la longueur optique efficace (L1) de la première chambre (1), considérée dans la direction du rayonnement, est égale à la longueur optique efficace (L2) de la seconde chambre (2), et que les volumes de gaz des deux chambres sont différents.

5. Détecteur pneumatique selon la revendication 3 ou 4, caractérisé par le fait que le volume de gaz de la première chambre (1) se compose du volume de gaz (V1) traversé par les rayons et qui se trouve dans la chambre et d'un volume-ballast (V3) non traversé par les rayons et communiquant avec la chambre (1) de façon à laisser passer le gaz.
